# EUROPÄISCHE PATENTSCHRIFT

(11) **EP 0 815 720 B1**
(45) Veröffentlichungstag und Bekanntmachung des Hinweises auf die Patenterteilung: **20.03.2002**
(21) Anmeldenummer: 97107963.7
(22) Anmeldetag: 15.05.1997
(51) Int. Cl.: A01F 15/10, A01D 90/04, A01D 89/00

(54) **Ballenpresse**
Roundbaler
Presse à balles rondes

(30) Priorität: 01.07.1996 DE 29611444 U
(43) Veröffentlichungstag der Anmeldung: 07.01.1998
(73) Patentinhaber: Kverneland Gottmadingen GmbH & Co. KG, 78244 Gottmadingen (DE)
(72) Erfinder: Willburger, Richard, 78262 Gailingen (DE); Becker, Clemens, 78239 Rielasingen/Worblingen (DE)
(74) Vertreter: Grünecker, Kinkeldey, Stockmair & Schwanhäusser Anwaltssozietät

(56) Entgegenhaltungen:
- EP-A- 0 064 112
- EP-A- 0 148 537
- EP-A- 0 659 332

## Beschreibung

Die Erfindung betrifft eine Ballenpresse der im Oberbegriff des Patentanspruchs 1 angegebenen Art.

Rundballenpressen stellen aus dem Erntegut gewickelte, in etwa zylindrische Rundballen her. Großpackenpressen erzeugen hingegen aus dem Erntegut in etwa quaderförmige Ballen. In beiden Fällen wird das Erntegut mit der Pick-up-Vorrichtung aufgenommen und durch den Zuführkanal der Preßkammer zugeführt, wobei ein zwischen der Pick-up-Vorrichtung und der Preßkammer arbeitendes Schneidwerk das Erntegut zur Preßkammer fördert und in ziehenden Schnitten schneidet. Der Schneidrotor verbindet die Schneidfunktion mit einer Förderaufgabe. Da die Aufnahmebreite der Pick-up-Vor-richtung im Regelfall größer ist als die Breite des Einlasses in die Preßkammer wird der breit aufgenommene Erntegutschwad durch die wenigstens eine Querförderschnecke auf die geringere Breite des Einlasses der Preßkammer gebracht.

Bei einer seit langem auf dem Markt befindlichen Rundballenpresse der Firma Greenland, Typenbezeichnung RB3.20, sind in Förderrichtung von der Pick-up-Vorrichtung zum Schneidwerk zwischen der Pick-up-Vorrichtung und dem Schneid-rotor beiderseits Querförderschnecken auf vom Schneidrotor getrennten und getrennt angetriebenen Wellen vorgesehen. Dies bedingt einen relativ langen Zuführkanal, eigenständige Lagerungen und Antriebe für die Querförderschnecken und, auch durch das zusätzliche Antriebssystem, erhöhten Platzbedarf und zusätzliches Gewicht. Dieses Prinzip ist auch bekannt aus EP-A-0 659 332, wobei dort die Querförderschnecken in Gehäuseabschnitten der Pick-up-Vorrichtung untergebracht sind, welche den Zuführweg auf die Breite begrenzen, die durch seitliche, stehende Endwände des Schneidwerks fortgesetzt wird.

Bei einer aus EP-A-0 148 537 bekannten Großpackenpresse ist aufgrund des nach oben gerichteten Zuführkanals ein Mitnehmerrotor vor dem Eintritt in die Preßkammer vorgesehen. Zwischen der Pick-up-Vorrichtung und dem Mitnehmerrotor sind in außenliegenden Endbereichen Querförderschnecken vorgesehen. Der Mitnehmerrotor arbeitet in einer taumelnden Bewegung relativ zu den Querförderschnecken, um einzelne Chargen des Ernteguts einzubringen.

Bei einer aus EP-A-0 064 112 bekannten Rundballenpresse wird das Erntegut ohne zusätzliche Schneidbearbeitung durch ein Schneidwerk verarbeitet. Das von der Pick-up-Vorrichtung in Richtung zur Preßkammer gebrachte Erntegut wird von einer Zinkenwalze in die Preßkammer eingführt. Die Zinkenwalze besitzt seitlich außen Querförderschnecken, die das Erntegut von der Breite der Pick-up-Vorrichtung auf die schmalere Breite des Einlasses in die Preßkammer zusammenführen und an den Zinkenrotor übergeben.

Der Erfindung liegt die Aufgabe zugrunde, eine Ballenpresse der eingangs genannten Art zu schaffen, die baulich vereinfacht, im Zuführbereich platzsparend und kompakt, und leichter und kostengünstiger ist als die bekannten Ballenpressen.

Die gestellte Aufgabe wird mit den Merkmalen des Patentanspruchs 1 gelöst.

Der Schneidrotor fungiert bei dieser Ausbildung gleichzeitig als Träger der wenigstens einen Querförderschnecke. Der ohnedies für den Schneidrotor vorgesehene Antrieb treibt auch die Querförderschnecken. Es ist ein kürzerer Zuführkanal möglich und es werden Einbauraum, Gewicht und zusätzliche Komponenten eingespart.

Es ist zwar aus DE-A-40 25 467 bekannt, eine in der Preßkammer einer Rundballenpresse angeordnete, kleindurchmeßrige Startwalze mit Mitnehmerelementen in einem Längsmittelbereich und beidendig mit Querförderschnecken auszustatten. Die Startwalze dient unabhängig von einem gegebenenfalls vorgeschalteten, dann breiten Schneidwerk zum Einleiten des Ballenwickelvorgangs innerhalb der Preßkammer.

Besonders wichtig, auch für sich alleine gesehen, ist weiterhin die Ausführungsform gemäß Anspruch 2 die Absenkbarkeit des Schneidwerkbodens. Diese Ausbildung ist für Verstopfungen im Schneidwerkbereich oder bei versehentlich mitgeförderten Fremdobjekten zweckmäßig, um die Störung rasch und einfach beseitigen zu können und um Schäden der Komponenten in diesem Bereich zu verhindern. Besonders günstig erstreckt sich der absenkbare Schneidwerkboden bis unter die in den Schneidrotor integrierte Querförderschnecke, und zwar für Störungen bei der Übergabe des Ernteguts von der Querförderschnecke zu den Mitnehmern des Schneidrotors. Der Schneidwerkboden läßt sich entweder manuell oder gesteuert absenken. Besonders vorteilhaft ist es, den Schneidwerkboden bei Erreichen eines vorwählbaren Anpreßdrucks automatisch abzusenken.

Ein symmetrischer Aufbau ist gemäß Anspruch 3 gegeben. Die beiden Querförderschnecken, die vorzugsweise zweigängig und sehr leistungsfähig sind, teilen sich den Breitenunterschied zwischen der Aufnahmebreite der Pick-up-Vorrichtung und der Breite des Einlasses in die Preßkammer.

Eine wirksame Querförderung mit hoher Leistungsfähigkeit ergibt sich gemäß Anspruch 4.

Lange Standzeiten und ein störungsfreier Betrieb werden gemäß Anspruch 5 erreicht.

Baulich einfach ist ein Schneidrotor mit fest angebrachten Mitnehmern und Querförderschnecken auf dem Grundkörper gemäß Anspruch 6.

Gemäß Anspruch 7 weist der Schneidrotor gesteuerte Mitnehmer auf, denen die Querförderschnecken das breit aufgenommene Erntegut konzentriert zuführen.

Gemäß Anspruch 8 lassen sich Störungen, z.B. ein Stau, über die gesamte Breite des Schneidrotors rasch und bequem beseitigen.

Gemäß Anspruch 9 ist zum Beseitigen der Störung Zugang von zwei Seiten möglich, außerdem wird der Schneidrotor und werden gegebenenfalls die Schneidorgane beim Absenken des Schneidwerkbodens sehr rasch entlastet.

Gemäß Anspruch 10 schwenkt der Schneidwerkboden an seiner der Pick-up-Vorrichtung zugewandten Seite nach unten.

Gemäß Anspruch 11 öffnet sich der Schneidwerkboden nach Art einer Doppelklappe nach unten, so daß gegebenenfalls gestautes Erntegut oder Fremdobjekte selbsttätig herausfallen. Kombinationen der verschiedenen Bewegungssysteme für den absenkbaren Schneidwerkboden gemäß den Ansprüchen 8 bis 11 können zweckmäßig sein.

Anhand der Zeichnungen werden Ausführungsformen des Erfindungsgegenstandes erläutert. Es zeigen:
- Fig. 1: eine schematische Seitenansicht einer Rundballenpresse, teilweise im Schnitt,
- Fig. 2: eine Detailansicht in Richtung eines Pfeiles II in Fig. 1,
- Fig. 3: eine Ansicht in Richtung eines Pfeils III in Fig. 2,
- Fig. 4: eine Draufsicht des Schneidrotors,
- Fig. 5: zwei Schnitte in Fig. 4 in den Ebenen V,
- Fig. 6: schematisch eine Detailvariante zu Fig. 3, und
- Fig. 7: eine weitere Teilvariante zu Fig. 3.

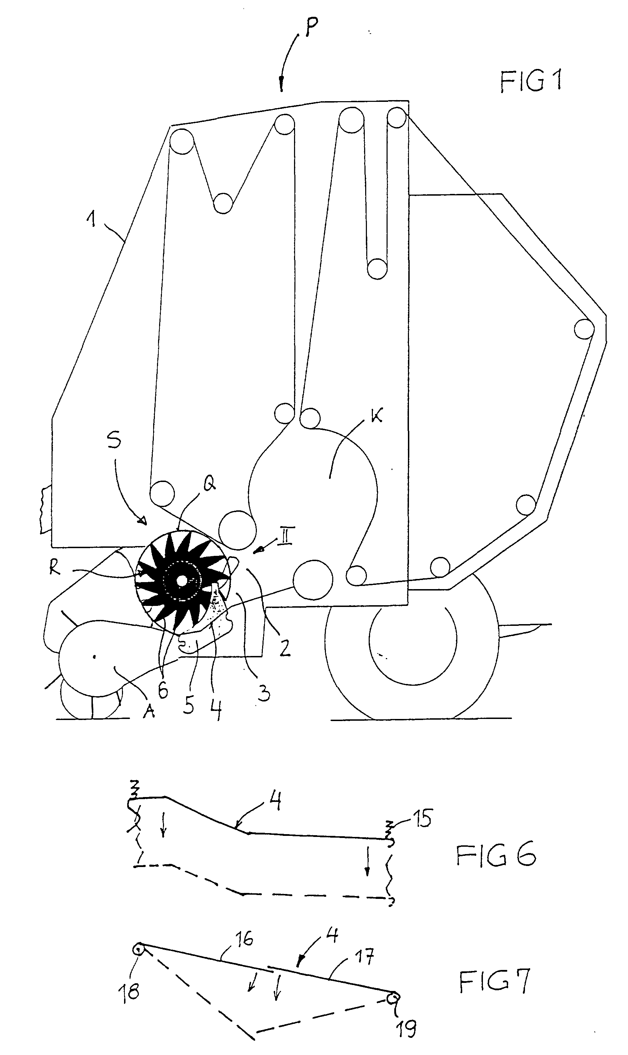

Eine Rundballenpresse P gemäß Fig. 1 weist ein Gehäuse 1 auf, in dem mittels Preßwalzen und Riemen eine im Volumen variable Preßkammer K begrenzt ist, der mittels einer Pick-up-Vorrichtung A aufgenommenes Erntegut entlang eines Zuführkanals 3 und durch einen Einlaß 2 zugeführt wird. Zwischen der Pick-up-Vorrichtung A und dem Einlaß 2 ist ein Schneidwerk S vorgesehen, das einen um eine quer durch den Zuführkanal verlaufende Achse drehbar angetriebenen Schneidrotor R mit umfangsseitigen Mitnehmern 6, seitlichen Querförderschnekken Q und in einem Schneidwerkboden 4 auf übliche Weise angeordnete Schneidorgane 5 aufweist. Die Drehrichtung des Schneidrotors R verläuft in Fig. 1 entgegen dem Uhrzeigersinn. Die Preßkammer K könnte alternativ ohne Riemen nur von rotierbaren Preßwalzen begrenzt sein und eine unveränderliche Größe aufweisen (nicht gezeigter Rundballenpreßtyp). Ferner könnte das Schneidwerk S in einer sogenannten Großpackenpresse vorgesehen sein, die quaderförmige Ballen erzeugt.

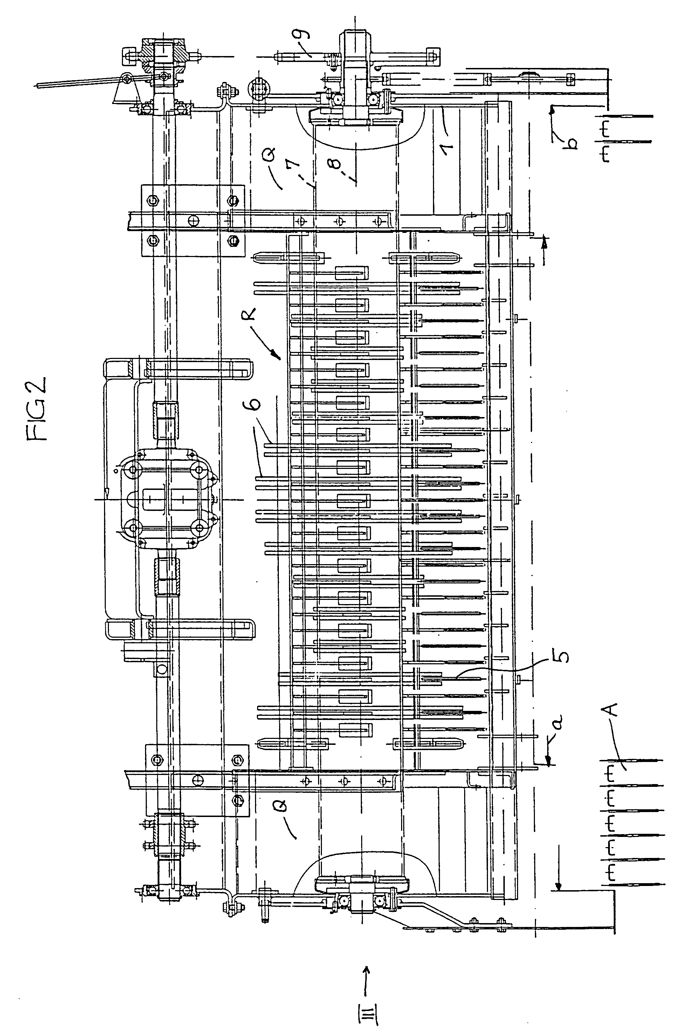

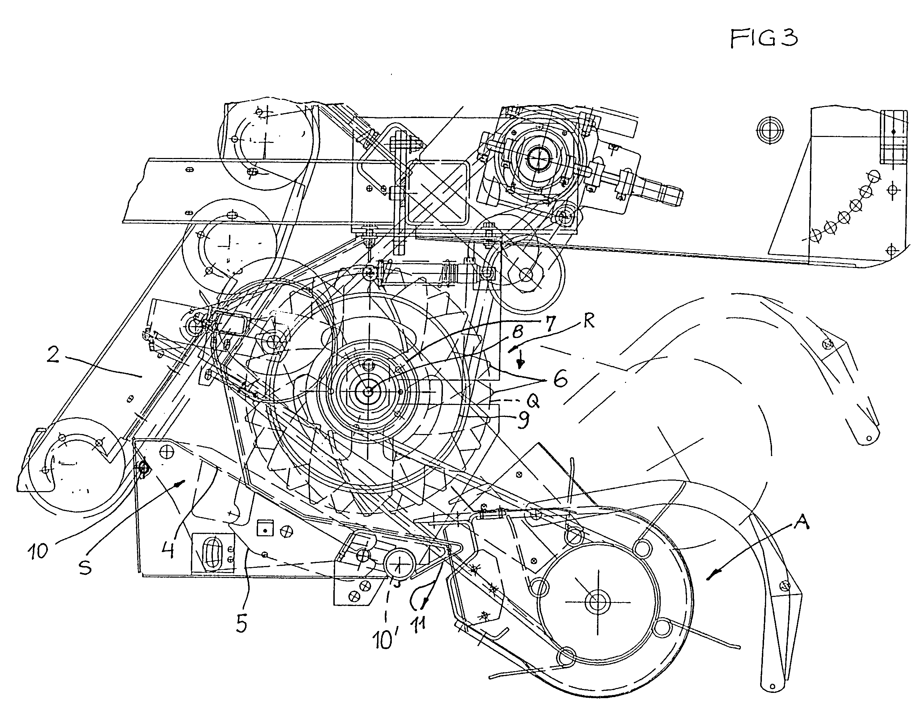

In der Ansicht von Fig. 2 ist erkennbar, daß die Mitnehmer 6 des Schneidrotors R sich in einem mittleren Längsabschnitt eines zylindrischen Grundkörpers 7 und mit axialen Zwischenabständen jeweils paarweise und in Umfangsrichtung zueinander versetzt (siehe auch Fig. 3) angeordnet sind. Die Schneidorgane 5 greifen von unten jeweils zwischen ein Paar zusammengehörender Mitnehmer 6 ein. Auf den mitnehmerfreien Endabschnitten des Grundkörpers 7 ist je eine Querförderschnecke Q angeordnet, die am Ende des Grundkörpers 7 beginnt und in einem axialen Abstand vor den jeweils ersten Mitnehmern 6 endet. Der Schneidrotor R ist um die Achse 8 drehbar im Gehäuse 1 gelagert und wird über ein Kettenrad 9 drehangetrieben, dessen Drehbewegung von einem darüberliegenden Drehantrieb abgeleitet wird. a deutet die Breite des Einlasses 2 an, während b die Breite verdeutlicht, mit der die Pick-up-Vorrichtung A das Erntegut aufnimmt. Die Mitnehmer 6 sind bei dieser Ausführungsform fest am Grundkörper 7 angebracht. Es wäre aber auch denkbar, bei der Umlaufbewegung des Schneidrotors R gesteuert ein- und ausfahrbare Mitnehmer 6 zu verwenden.

Gemäß Fig. 3 liegt der Schneidwerkboden 4, der - wie gezeigt - mit einem Knick ausgebildet sein kann, unterhalb des Schneidrotors R mit seinen Querförderschnecken Q. Der Schneidwerkboden 4 ist in Fig. 3 um eine beim und unterhalb des Einlasses 2 liegende Querachse 10 nach unten durch Schwenken absenkbar, etwa in Richtung eines Pfeiles 11. Alternativ könnte der Schneidwerkboden 4, der zusammen mit den Schneidorganen 5 absenkbar sein sollte, auch um eine Achse 10' nahe der Pick-up-Vorrichtung A nach unten geschwenkt werden, und zwar im Falle einer Verstopfung der Zufuhr oder bei Vorliegen eines mitgeförderten Fremdobjekts, um eine Störung beseitigen zu können.

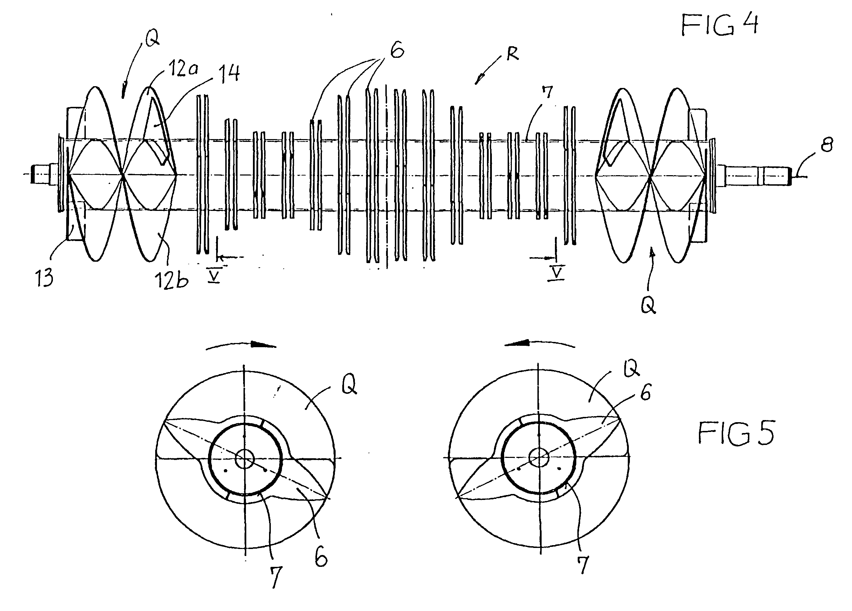

Die Ausbildung des Schneidrotors R ist im Detail aus den Fig. 4 und 5 zu ersehen. Die Mitnehmer 6 sind z.B. jeweils aus einem Paar diametral voneinander wegstehender Zinken gebildet, die mit lagerschalenartigen Innenteilen auf dem Grundkörper 7 befestigt sind. Die paarweisen Mitnehmer 6 sind mit regelmäßigen Winkelabständen in Umfangsrichtung zueinander versetzt. Der Hülldurchmesser der Mitnehmer 6 entspricht in etwa dem Hülldurchmesser der Querförderschnekken Q. Jede Querförderschnecke Q ist bei dieser Ausführungsform aus zwei gleichsinnigen Schneckengangelementen 12a und 12b gebildet, die auf dem Grundkörper 7 befestigt sind, z.B. durch Schweißen. An den außenliegenden Enden der Querförderschnecken Q sind Abschirmbleche 13 angebracht. Nahe den inneren Enden der Querförderschnecken Q sind Zusatz-Schneckengangplatten 14 vorgesehen, deren jede in etwa parallel zum benachbarten Schneckengangelement 12a verläuft und mit ihrem Ende gegenüber dem Ende des zugehörigen Schneckengangelementes 12a zurückweicht.

In Fig. 6 ist der Schneidwerkboden 4 im wesentlichen zu sich selbst parallel in Richtung der Pfeile absenkbar, z.B. gegen die Kraft von Haltefedern 15. Anstelle der Haltefedern könnten auch Arbeitszylinder oder Gasdruckfedern verwendet werden.

In Fig. 7 ist der Schneidwerkboden 4 quergeteilt, so daß zwei Bodenteile 16, 17 um Schwenkachsen 18 bzw. 19 nach Art einer doppelflügeligen Tür nach unten schwenkbar sind, zweckmäßigerweise so weit, daß aufgestautes Erntegut oder mitgenommene Fremdobjekte nach unten herausfallen bzw. herausgeholt werden können.

Die jeweilige Absenkbewegung des Schneidwerkbodens 4 kann manuell vorgenommen werden. Es ist aber auch denkbar, sie über Hilfsantriebe gesteuert durchzuführen. Besonders zweckmäßig ist es, den Auflagedruck oder Anpreßdruck des Ernteguts am Schneidwerkboden abzutasten und dann automatisch eine Absenkbewegung des Schneidwerkbodens 4 einzusteuern, wenn ein vorwählbarer, nicht mehr zulässiger Anpreßdruck erreicht ist.

Das Schneidwerk S mit dem mit den Querförderschnecken Q versehenen Schneidrotor R (mit zumindest einer Querförderschnecke Q an einer Seite) ist nicht nur bei Rundballenpressen zweckmäßig, sondern auch bei sogenannten Großpakkenpressen, die quaderförmige Ballen herstellen, und auch bei Ladewagen. Der absenkbare Schneidwerkboden kann ebenfalls für beide Pressentypen und auch für Ladewagen zweckmäßig sein, und zwar alternativ oder additiv zum Schneidrotor R mit den Querförderschnecken.

## Patentansprüche

1. Ballenpresse (P), insbesondere Rundballen- oder Großpackenpresse, mit einem eine Preßkammer (K) enthaltenden Gehäuse (1), einer über einen Zuführkanal (3) der Preßkammer (K) vorgesetzten Pick-up-Vorrichtung (A), einem in einem Schneidwerkboden (4) gehalterte Schneidorgane (5) und einen mit diesen zusammenwirkenden, sich quer über den Zuführkanal (3) erstreckenden, mit Mitnehmern (6) ausgebildeten Schneidrotor (R) aufweisenden Schneidwerk (S) vor einem Preßkammer-Einlaß (2), der in Querrichtung schmaler ist als die Aufnahmebreite der Pick-up-Vorrichtung (A), und mit wenigstens einer zum Schneidrotor (R) achsparallelen Querförderschnecke (Q) zwischen der Pick-up-Vorrichtung (A) und dem Preßkammereinlaß, mit der von der Pick-up-Vorrichtung (A) breit aufgenommenes Erntegut auf die schmalere Breite (a) des Preßkammereinlasses (2) zusammenführbar ist, **dadurch gekennzeichnet, daß** der Schneidrotor (R) mit im wesentlichen der Aufnahmebreite (b) der Pick-up-Vorrichtung (A) entsprechender Länge ausgebildet ist, und daß die wenigstens eine Querförderschnecke (Q) am Schneidrotor (R) in einem mitnehmerfreien Endabschnitt angeordnet ist.

2. Ballenpresse nach Anspruch 1, **dadurch gekennzeichnet, daß** der Schneidwerkboden (4) zumindest unterhalb des die wenigstens eine Querförderschnecke (Q) aufweisenden Schneidrotors (R) absenkbar ist.

3. Ballenpresse nach Anspruch 1, **dadurch gekennzeichnet, daß** an beiden mitnehmerfreien Endabschnitten des Schneidrotors (R) eine, vorzugsweise mehrgängige, Querförderschnecke (Q) vorgesehen ist.

4. Ballenpresse nach Anspruch 3, **dadurch gekennzeichnet, daß** die Querförderschnecken (Q) in Drehrichtung des Schneidrotors (R) in den Preßkammereinlaß (2) jeweils in Richtung zur Mitte fördernde Schneckenelemente (12a, 12b), vorzugsweise mehrere in Umfangsrichtung versetzte Schneckenelemente, aufweisen.

5. Ballenpresse nach Anspruch 1, **dadurch gekennzeichnet, daß** am außenseitigen Ende der Querförderschnecke (Q) wenigstens ein Abschirmblech (13) und im Bereich des innenseitigen Endes wenigstens eine Zusatz-Schneckengangplatte (14) vorgesehen sind.

6. Ballenpresse nach Anspruch 1, **dadurch gekennzeichnet, daß** der Schneidrotor (R) einen zylindrischen Grundkörper (7) mit fest angebrachten Mitnehmern (6), vorzugsweise doppelseitige Zinken, aufweist, und daß die Querförderschnecke (Q) an dem Grundkörper angeordnet ist.

7. Ballenpresse nach Anspruch 1, **dadurch gekennzeichnet, daß** der Schneidrotor (R) in einem zylindrischen Grundkörper gesteuert ein- und ausfahrbare Mitnehmer, vorzugsweise Zinken, aufweist, und daß die Querförderschnecke (Q) an dem Grundkörper angeordnet ist.

8. Ballenpresse nach Anspruch 2, **dadurch gekennzeichnet, daß** der Schneidwerkboden (4) über die Gesamtlänge des Schneidrotors (R) absenkbar ist.

9. Ballenpresse nach Anspruch 2, **dadurch gekennzeichnet, daß** der Schneidwerkboden (4) im wesentlichen zu sich parallel absenkbar ist.

10. Ballenpresse nach Anspruch 2, **dadurch gekennzeichnet, daß** der Schneidwerkboden (4) mit seinem der Pick-up-Vorrichtung (A) zugewandten Endbereich um eine in etwa unter dem Preßkammereinlaß (2) liegende Querachse (10) nach unten schwenkbar ist.

11. Ballenpresse nach Anspruch 2, **dadurch gekennzeichnet, daß** der Schneidwerkboden (4) in Querrichtung geteilt ist und zwei jeweils um eine Querachse (18, 19) beim Preßkammereinlaß (2) und nahe der Pick-up-Vorrichtung (A) nach unten schwenkbare Bodenteile (16, 17) aufweist.

## Claims

1. Baler (P), more especially a roll baler or large packing press, including a housing (1), which contains a pressing chamber (K), a pick-up device (A) which precedes the pressing chamber (K) via a supply passage (3), a cutting mechanism (S) which has cutting members (5) mounted in a cutting mechanism base (4) and a cutting rotor (R) which co-operates with said cutting members, which rotor extends transversely over the supply passage (3) and is provided with entrainment means (6), upstream of a pressing chamber inlet (2) which, when viewed with respect to the transverse direction, is narrower than the pick-up width of the pick-up device (A), and at least one transverse screw conveyor (Q), which is axis-parallel relative to the cutting rotor (R), between the pick-up device (A) and the pressing chamber inlet, by means of which screw conveyor harvested material, which has been breadthwisely picked-up by the pick-up device (A), can be brought together to the narrower width (a) of the pressing chamber inlet (2), **characterised in that** the cutting rotor (R) is provided with a length which substantially corresponds to the pick-up width (b) of the pick-up device (A), and **in that** the at least one transverse screw conveyor (Q) is disposed on the cutting rotor (R) in an end portion which is free of entrainment means.

2. Baler according to claim 1, **characterised in that** the cutting mechanism base (4) is lowerable at least beneath the cutting rotor (R) which has at least one transverse screw conveyor (Q).

3. Baler according to claim 1, **characterised in that** a transverse screw conveyor (Q), which is preferably multi threaded, is provided on the two end portions of the cutting rotor (R) which are free of entrainment means.

4. Baler according to claim 3, **characterised in that**, when viewed with respect to the direction of rotation of the cutting rotor (R), the transverse screw conveyors (Q) include screw elements (12a, 12b) which each convey material into the pressing chamber inlet (2) towards the centre, preferably a plurality of screw elements which are set in the circumferential direction.

5. Baler according to claim 1, **characterised in that** at least one screening plate (13) is provided at the outside end of the transverse screw conveyor (Q), and at least one additional screw-threaded plate (14) is provided in the region of the inside end.

6. Baler according to claim 1, **characterised in that** the cutting rotor (R) has a cylindrical basic body member (7) with securedly attached entrainment means (6), preferably double-sided tines, and **in that** the transverse screw conveyor (Q) is disposed on the basic body member.

7. Baler according to claim 1, **characterised in that** the cutting rotor (R) has entrainment means, preferably tines, which can be retracted and extended in a controlled manner in a cylindrical basic body member, and **in that** the transverse screw conveyor (Q) is disposed on the basic body member.

8. Baler according to claim 2, **characterised in that** the cutting mechanism base (4) is lowerable over the entire length of the cutting rotor (R).

9. Baler according to claim 2, **characterised in that** the cutting mechanism base (4) is lowerable substantially parallel to itself.

10. Baler according to claim 2, **characterised in that** the cutting mechanism base (4), with its end region facing the pick-up device (A), is pivotable downwardly about a transverse axis (10), which lies substantially beneath the pressing chamber inlet (2).

11. Baler according to claim 2, **characterised in that** the cutting mechanism base (4) is divided in the transverse direction and has two base portions (16, 17), which are each pivotable downwardly about a transverse axis (18, 19) at the pressing chamber inlet (2) and close to the pick-up device (A).

## Revendications

1. Presse à balles (P), notamment presse à balles rondes ou presse à grands paquets, avec un boîtier (1) renfermant une chambre de compression (K), un dispositif de ramassage (A) disposé par un canal d'amenée (3) en amont de la chambre de compression (K), un mécanisme de coupe (S), présentant des organes de coupe (5) retenus dans un fond de mécanisme de coupe (4) et un rotor de coupe (R) coopérant avec ceux-ci, s'étendant transversalement sur le canal d'amenée (3), réalisé avec des organes d'entraînement (6), en amont d'une entrée de chambre de compression (2) qui est plus étroite en direction transversale que la largeur de réception du dispositif de ramassage (A), et avec au moins une vis de convoyage transversal (Q) parallèle à l'axe d'un rotor de coupe (R) entre le dispositif de ramassage (A) et l'entrée de la chambre de compression, au moyen de laquelle le produit de la moisson ramassé par le dispositif de ramassage (A) sur une largeur peut être ramené à la largeur plus étroite (a) de l'entrée de la chambre de compression (2), **caractérisée en ce que** le rotor de coupe (R) est réalisé avec une longueur correspondant sensiblement à la largeur de réception (b) du dispositif de ramassage (A) et **en ce qu'**au moins une vis de convoyage transversal (Q) précitée est disposée au rotor de coupe (R) dans un tronçon d'extrémité exempt d'organes d'entraînement.

2. Presse à balles selon la revendication 1, **caractérisée en ce que** le fond (4) du mécanisme de coupe peut être abaissé au moins en dessous du rotor de coupe (R) présentant au moins une vis de convoyage transversal (Q) précitée.

3. Presse à balles selon la revendication 1, **caractérisée en ce qu'**il est prévu aux deux tronçons d'extrémité (R) exempts d'organes d'entraînement du rotor de coupe (R) une vis de convoyage transversal (Q), de préférence à plusieurs pas.

4. Presse à balles selon la revendication 3, **caractérisée en ce que** les vis de convoyage transversal (Q) présentent dans la direction de rotation du rotor de coupe (R) dans l'entrée de la chambre de compression (2) des éléments de vis (12a, 12b) convoyant chacun en direction du milieu, de préférence plusieurs éléments de vis décalés dans la direction périphérique.

5. Presse à balles selon la revendication 1, **caractérisée en ce que** sont prévus à l'extrémité au côté extérieur de la vis de convoyage transversal (K) au moins une tôle de protection (13) et au voisinage de l'extrémité côté intérieur au moins une plaque additionnelle à pas de vis (14).

6. Presse à balles selon la revendication 1, **caractérisée en ce que** le rotor de coupe (R) présente un corps de base cylindrique (7) avec des organes d'entraînement (6) disposés fixement, de préférence des dents à côté double, et **en ce que** la vis de convoyage transversal (Q) est disposée au corps de base.

7. Presse à balles selon la revendication 1, **caractérisée en ce que** le rotor de coupe (R) présente dans un corps de base cylindrique des organes d'entraînement, de préférence des dents, pouvant être rentrés et sortis d'une manière commandée, et **en ce que** la vis de convoyage transversal (Q) est disposée au corps de base.

8. Presse à balles selon la revendication 2, **caractérisée en ce que** le fond (4) du mécanisme de coupe peut être abaissé sur la longueur totale du rotor de coupe (R).

9. Presse à balles selon la revendication 2, **caractérisée en ce que** le fond (4) du mécanisme de coupe peut être abaissé sensiblement parallèlement à lui-même.

10. Presse à balles selon la revendication 2, **caractérisée en ce que** le fond (4) du mécanisme de coupe peut être pivoté vers le bas avec sa zone d'extrémité orientée vers le dispositif de ramassage (A) autour d'un axe transversal (10) situé à peu près sous l'entrée (2) de la chambre de compression.

11. Presse à balles selon la revendication 2, **caractérisé en ce que** le fond (4) du mécanisme de coupe est divisé en direction transversale et présente deux parties de fond (16, 17) pouvant être amenées à pivoter vers le bas respectivement autour d'un axe transversal (18, 19) à l'entrée (2) de la chambre de compression et à proximité du dispositif de ramassage (A).
